# EUROPEAN PATENT APPLICATION

(11) **EP 3 533 549 A1**
(43) Date of publication of application: **04.09.2019**
(21) Application number: 19155677.8
(22) Date of filing: 06.02.2019
(51) Int. Cl.: B23K 7/00, B23K 37/02, B23K 37/047, B23Q 17/24

(54) **A PLANT FOR THE OXY-FUEL CUT OF PRODUCTS MADE OF STRUCTURAL STEEL**

(30) Priority: 09.02.2018 IT 201800002554
(71) Applicant: Manni Sipre S.p.A., 37135 Verona (IT)
(72) Inventor: MASSIMO, FABBRI, 37057 San Giovanni Lupatoto (VR) (IT)
(74) Representative: Autuori, Angelo

(57) **Abstract**

A plant for the oxy-fuel cutting of products (**B**) made of structural steel controllable by a single operator, comprising at least one first and one second machining station (**10**, **10**') comprising a respective oxy-fuel cutting torch (**31**, **31**') and an operative station (**40**) for the single operator to control the oxy fuel cutting torches (**31**, **31**'). At least one of the machining stations (**10**, **10**') comprises at least one video camera (**47**, **47**', **47**") oriented towards the respective oxy fuel cutting torch (**31**, **31**'), while the operative station (**40**, **40**') of the other of the machining stations (**10**, **10**') includes display means (**48**') operatively connected with the video camera (**47**) to display the images thereof and stop means (**49**, **49**') operatively connected with the oxy fuel cutting torches (**31**, **31**').

## Description

### Field of the invention

The present invention can generally apply to the technical field of processing products made of structural steel for manufacturing elements made of structural steel, designated for example to manufacture bearing structures in the civil and industrial construction, mechanical constructions, structural steelwork, installations, shelving, automated warehouses industries or the like, and it particularly regards a plant for the oxy fuel cutting of such products made of structural steel.

### Definition

In the present document, the expression "products made of structural steel" is used to indicate flat and/or long products made of structural steel of any shape as defined by the UNI EN 10025 standard such as, for example, "H" beams, "I" beams, laminates, sheets, profiles, tubular or the like.

### State of the Art

Products made of structural steel, generally beams or sheets of various shapes are known to be used in the civil and industrial construction, mechanical construction, structural steelwork, installations, shelving, automated warehouses industries or the like.

Generally, such products made of structural steel are made starting from large-dimensioned semi-finished products manufactured by a steelworks factory, for example sheets or beams, which must then be machines (generally cut and/or drilled) to obtain various products.

A known machining consists of the so-called "oxy-fuel cutting" of products made of structural steel, which provides for the cutting using an oxy acetylene flame and a pure oxygen jet.

Thus, known are plants for products made of structural steel in which there are provided a plurality of machining stations acting simultaneously on the same product made of structural steel or on different products made of structural steel.

As known, the oxy-fuel cutting operation is particularly difficult and requires continuous visual monitoring by a highly specialised operator. Thus, the plants of the known type comprise a plurality of machining stations each comprising at least one oxy fuel cutting torch and a station for an operator positioned at a distance so that the operator can monitor the machining visually.

It is thus clear that the known plants have particularly high management costs. Another disadvantage of the oxy-fuel cutting plants of the known type lies in the difficulty to find specialised operators in the labour market.

### Summary of the invention

An object of the present invention is to at least partly overcome the drawbacks illustrated above, by providing a highly efficient and relatively inexpensive plant for machining products made of structural.

Another object of the present invention is to provide a plant for machining products made of structural steel with low management costs.

Another object of the present invention is to provide a plant for machining products made of structural steel that requires a limited number of operators for the operation thereof.

These and other objects to be further clarified hereinafter, are attained by a plant for machining products made of structural steel having one or more of the characteristics described, illustrated and/or claimed herein.

The dependent claims describe advantageous embodiments of the invention.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:

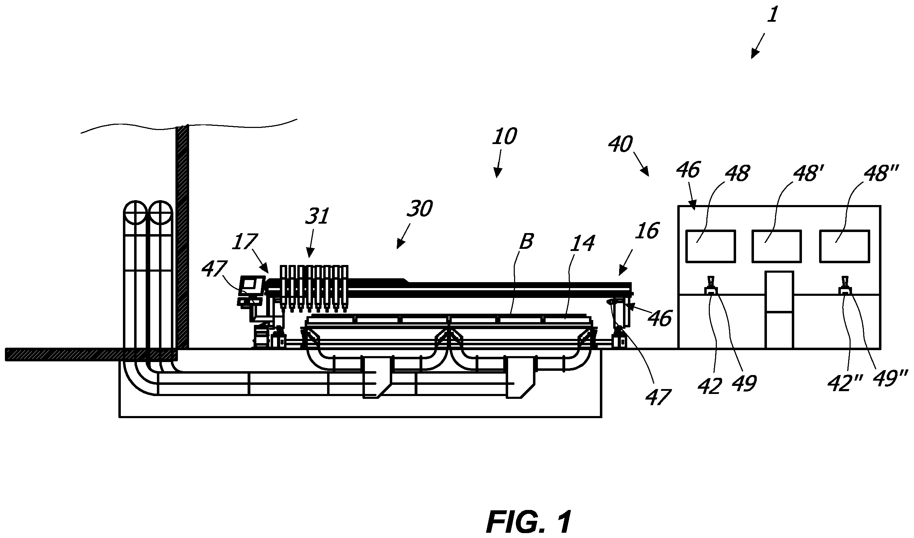

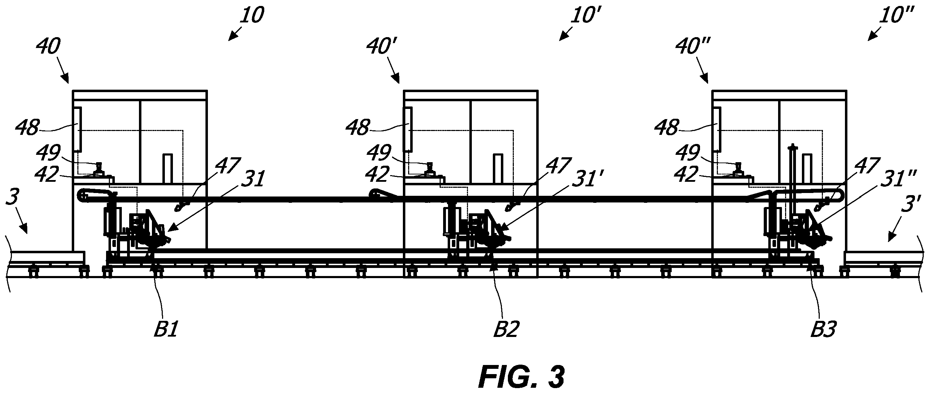

**FIGS. 1****,** **2** and **3** are respectively a front, top and lateral schematic view of some details of a plant **1**.

### Detailed description of a preferred embodiment

With reference to the aforementioned figures, herein described is a plant **1** for cutting large-dimensioned products **B** made of structural steel, which can be manufactured in loco or elsewhere, typically in a steelworks factory.

More in detail, the plant **1** may be particularly suitable for carrying out an oxy-fuel cutting process, i.e. the operation of cutting steel by means of an oxy acetylene flame and a pure oxygen jet.

An oxy fuel cutting torch **31**, of per se known type, may be used to this end.

Thus, the plant **1** may comprise at least one machining station **10**, preferably a plurality of machining stations **10**, **10'**, **10"** each one of which may machine, i.e. cut, a different portion of the same product **B** or different products **B**.

For example, the attached figures show a plant **1** comprising three machining stations **10**, **10'**, **10"** that operate on three different portions of a single product **B** made of steel.

The plant **1** may thus comprise a work plane **14** for supporting the product **B** during the machining and means **3** for loading the product **B** to be machined and means **3'** for unloading the machined product **B** from the work plane **14**. It is clear that each machining station **10** may possibly comprise a work plane **14** and suitable means **3** for loading and means **3'** for unloading the product.

For example, the plant **1** may comprise a loading bench **3,** an unloading bench **3'** and displacement means, for example an arm, for facilitating the positioning of the product **B** on the work plane **14**. Furthermore, the arm may possibly promote the loading and/or unloading of the product **B** in the and/or from the machining station **10** thus defining both the loading means **3** and the unloading means **3'**.

However, it is clear that any other system, per se known to a man skilled in the art, may be used for the purpose to promote the controlled and guided displacement of the product **B** in the machining station **10**.

Means of per se known type may be possibly present for locking the product **B** in a predefined machining position.

Preferably, the work plane **14** may have a substantially longitudinal extension defining an axis **X**. Furthermore, the product **B** may suitably be displaced in the plant along an advancement direction substantially coincident with the axis **X**.

It is clear that the work plane **14** may be different depending on the types of products **B** to be machined, for example, should the latter be a beam or a sheet.

The machining station **10** may comprise at least one machining head **30**, for example a cutting head **30** each of which may include one or more torches **31**.

Furthermore, the machining station **10** may suitably comprise support structures **16** for supporting the cutting heads **30**, for example a framework, a guide rail or the like, and drive means **17** acting on the torch **31** to promote the displacement thereof and possibly guide means for guiding the displacement thereof, for example a robotic arm **17** so that it displaces and guides the torch **31**.

Even though not shown in the attached figures, it is clear that the torch **31** may be connected with means for supplying oxygen and acetylene - arranged inside or outside the plant **1** - by means of suitable ducts of per se known type.

At least one operative station **40** for controlling the torches **31** may be provided for according to a particular aspect of the invention.

Suitably, each machining station **10**, **10'**, **10"** may comprise the respective torch **31**, **31'**, **31"** and a respective operative station **40**, **40'**, **40"**. In particular, the operative station **40**, **40'**, **40"** and the torch **31**, **31'**, **31"** may be mutually spaced apart by a predetermined distance **d1**, **d1'**, **d1"** so that the single operator can visually monitor the latter **31**, **31'**, **31"** who is positioned at the former **40**, **40'**, **40"**.

The operative stations **40**, **40'**, **40"** may be mutually spaced apart by a predetermined distance **d3** so that the single operator - positioned at one of the operative stations **40** - is hindered from visually monitoring the oxy fuel cutting torch **31'**, **31"** of the other operative stations **40'**, **40"**.

Should the torch **31**, **31'**, **31"** be inoperative, the distance **d3** may thus substantially coincide with the distance between two torches **31**, **31'**, **31"**. For example, such distance **d3** may be greater than 20 m, preferably greater than 40 m.

On the other hand, the predetermined distances **d1**, **d1'**, **d1"** may thus be the distances between the operative station **40**, **40'**, **40"** and the torch **31**, **31'**, **31"** which may, for example, be comprised between 10 m and 20 m so as to allow the single operator to visually monitor the oxy-fuel cutting process.

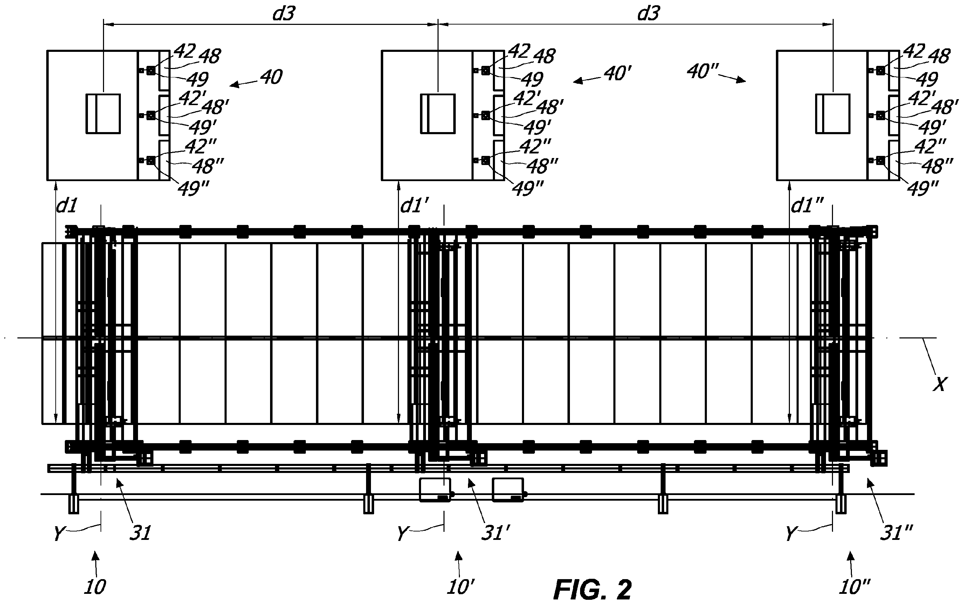

It is clear that during use the torch **31**, **31'**, **31"** may move with respect to the operative station **40**, **40'**, **40"** thus varying such distance **d1**, **d1'**, **d1"**. For example, as schematically illustrated in Fig. 2, the torches **31**, **31'**, **31"** may slide along a respective axis **Y** substantially perpendicular to the axis **X**.

Thus, such predetermined distances **d1**, **d1'**, **d1"** may suitably be the maximum distances between the operative station **40**, **40'**, **40"** and the torch **31**, **31'**, **31"**.

Each operative station **40**, **40'**, **40"** may comprise means **42**, **42'**, **42"** for controlling the respective torches **31**, **31'**, **31"**, which may be suitable to be actuated by the single operator positioned at the respective operative station **40**, **40'**, **40"** so as to allow the operator to displace the torch **31** visually.

For example, the control means **42**, **42'**, **42"** may comprise push button panels, knobs, levers and/or joysticks that can be actuated manually by the single operator. It is clear that such control means **42**, **42'**, **42"** may be operatively connected to the robotic arm **17** by means of suitable wiring systems.

On the other hand, the operative station **40** of a machining station **10** may be operatively connected with the torches **31'**, **31"** of the other machining stations **10**, **10'** so that the torches **31'**, **31"** of the other machining stations **10**, **10'** can be monitored and/or activated and/or deactivated by the single operator positioned at the operative station **40**, as better outlined hereinafter.

To this end, there can be present a video surveillance system **46** which may comprise at least one video camera **47** arranged at the machining station **10** oriented towards the respective oxy fuel cutting torch **31** and display means **48** operatively connected with the video camera **47** for displaying the images thereof arranged in the operative station **40**.

The display means **48** may for example be one or more screens, monitors or the like.

Preferably, each operative station **40**, **40'**, **40"** may comprise a plurality of screens **48**, **48'**, **48"** each of which may be operatively connected with the video camera **47**, **47'**, **47"** of a different machining station **10**, **10'**, **10"**.

In this manner, the single operator positioned at any of the operative stations **40**, **40'**, **40"** may visually monitor the respective torch **31** and - by means of the screens **48'**, **48"** - the torches **31'**, **31"** of the other machining stations **10**, **10'**.

It is clear that the video cameras **47** may be suitable to operate in such operating environment, which is subject to the formation of high light-emission sparks and they may also resist against high temperatures and/or impacts.

On the other hand, the screens **48** may be configured to show the images shot by the video cameras **47**.

Suitably, the machining station **10** may comprise stop means **49**, actuatable by the single operator, operatively connected with the respective torch **31** to activate/deactivate the latter. For example, the stop means **49** may comprise a switch or a lever **49** of per se known type.

In particular, the single operator may deactivate one or more torches **31**, **31'**, **31"** in response to detection of images on the screens **48**, **48'**, **48"** relating to the malfunctions thereof.

The expression "malfunction" is used to indicate any event that does not allow the correct oxy-fuel cutting process.

Preferably, each operative station **40**, **40'**, **40"** may comprise a plurality of switches **49**, **49'**, **49"** operatively connected to each of the torches **31**, **31'**, **31"**.

In this manner, the single operator positioned at any of the operative stations **40**, **40'**, **40"** may activate/deactivate the torches **31**, **31'**, **31"** of any machining station **10**, **10'**, **10"**.

Operatively, the product **B** may be loaded in a manner such that one portion **B1** is at the machining station **10,** one portion **B2** is at the machining station **10'** and one portion **B3** is at the machining station **10"**.

Upon positioning the product **B**, one or more oxy-fuel cutting operations may be carried out, possibly simultaneously, on the different portions **B1**, **B2**, **B3** of the product **B**.

In this manner, during the machining the torches **31**, **31'**, **31"** of the respective stations **10**, **10'**, **10"** may be spaced apart by the distance **d3** of about 40 metres. Thus, a single operator cannot visually monitor or supervise all the torches **31**, **31'**, **31"** simultaneously.

Suitably, the same single operator may thus be positioned at any of the operative stations **40**, **40'**, **40"** and substantially simultaneously monitor the torches **31**, **31'**, **31"** of the respective stations **10**, **10'**, **10"** by means of the video surveillance system **46** comprising the video cameras **47** and the monitors **48**, **48'**, **48"** as described above.

Possibly, the torch **31**, **31'**, **31"** at the respective operative station **40**, **40'**, **40"**, where the single operator is positioned, may be visually monitored by the operator.

Furthermore, as described above, thanks to the control means **42**, **42'**, **42"** and the switches **49**, **49'**, **49"**, the single operator may control and/or stop and/or start the torches **31**, **31'**, **31"** of any of the machining stations **10**, **10'**, **10"**.

In light of the above, it is clear that the invention attains the pre-set objectives.

The invention is susceptible to numerous modifications and variants. All details can be replaced by other technically equivalent elements, and the materials can be different depending on the technical needs, without departing from the scope of protection defined by the attached claims.

## Claims

1. A plant for the oxy-fuel cut of products (**B**) made of structural steel controllable by a single operator, comprising:
- at least one first machining station (**10**) comprising:
- at least one first oxy fuel cutting torch (**31**) to perform a first oxy-fuel cutting process;
- at least one first operative station (**40**) for the single operator comprising first control means (**42**) operatively connected with said at least one first oxy fuel cutting torch (**31**) for the control thereof;
said at least one first operative station (**40**) and said at least one first oxy fuel cutting torch (**31**) being mutually spaced apart by a first predetermined distance (**d1**) so that the single operator can visually monitor the latter (**31**) who is positioned at the former (**40**);
- at least one second machining station (**10'**) comprising:
- at least one second oxy fuel cutting torch (**31'**) for performing a second oxy-fuel cutting process;
- at least one second operative station (**40'**) for the single operator comprising second control means (**42'**) operatively connected with said at least one second oxy fuel cutting torch (**31'**) for the control thereof;
said at least one second operative station (**40'**) and said at least one second oxy fuel cutting torch (**31'**) being mutually spaced apart by a second predetermined distance (**d1'**) so that the single operator can visually monitor the latter (**31'**) positioned in the former (**40'**);
wherein said at least one first operative station (**40**) and said at least one second operative station (**40'**) are mutually spaced apart by a third predetermined distance (**d3**) so that the operator positioned in one of the first and second operative stations (**40**, **40'**) is hindered from visually monitoring the oxy duel cutting torch (**31**, **31'**) of the other of the first and second operative stations (**40**, **40'**);
wherein at least one of said at least one first machining station (**10**) and at least one second machining station (**10'**) comprises at least one video camera (**47**, **47'**, **47"**) oriented towards the respective at least one first oxy fuel cutting torch (**31**) or at least one second oxy fuel cutting torch (**31'**), the respective at least one first operative station (40) or at least one second operative station (**40'**) of the other from among said at least one first machining station (**10**) and at least one
second machining station (**10'**) including display means (**48'**) operatively connected with said at least one video camera (**47**) to display the images thereof and stop means (**49**, **49'**) operatively connected with said respective at least one first oxy fuel cutting torch (**31**) or at least one second oxy fuel cutting torch (**31'**).

2. Plant according to claim 1, wherein said stop means (**49**, **49'**) are actuatable by the single operator positioned in said respective at least one first operative station (**40**) or at least one second operative station (**40'**) for selectively stopping the respective at least one first oxy fuel cutting torch (**31**) or at least one second oxy fuel cutting torch (**31'**) of said at least one among said at least one first machining station (**10**) and at least one second machining station (**10'**) in response
to the detection of images on said display means (**48**, **48'**, **48"**) relating to malfunctions of said at least one first oxy fuel cutting torch (**31**) or at least one second oxy fuel cutting torch (**31'**).

3. Plant according to claim 1 or 2, wherein both said at least one first machining station (**10**) and said at least one second machining station (**10'**) comprise:
- a respective at least one first and one second video camera (**47**, **47'**) each oriented towards the respective at least one first oxy fuel cutting torch (**31**) and at least one second cutting torch (**31'**);
- first and second display means (**48**, **48'**) operatively connected with the respective at least one first and one second video camera (**47**, **47'**) to display the images thereof;
- first and second stop means (**49**, **49'**) operatively connected with the respective at least one first oxy fuel cutting torch (**31**) and at least one second oxy fuel cutting torch (**31'**).

4. Plant according to claim 3, wherein said first and second stop means (**49**, **49'**) are actuatable by the single operator positioned respectively in said at least one second operative station (**40'**) or in said at least one first operative station (**40**) for selectively stopping the respective at least one second oxy fuel cutting torch (**31'**) or at least one first oxy fuel cutting torch (31) in response to the detection of images respectively on said second or first display means (**48**, **48'**) relating to malfunctions thereof.

5. Plant according to any one of the claims 1 to 4, wherein said display means (**48**), respectively said first and second display means (**48**, **48'**) comprise at least one monitor (**48**), respectively at least one first and one second monitor (**48**, **48'**).

6. Plant according to any one of claims 1 to 5, wherein at least one from among said first control means (**42**) and second control means (**42'**) is operatively connected respectively with said at least one second oxy fuel cutting torch (**31'**) or with said at least one first oxy fuel cutting torch (**31**), so as to allow the single operator positioned in the respective at least one first operative station (**40**) or at least one second operative station (**40'**) to control respectively said at least one second or first oxy fuel cutting torch (**31'**, **31**) in response to the detection of images on said display means (**48**) relating to malfunctions thereof.

7. Plant according to any one of the preceding claims, wherein both said first control means (**42**) and said second control means (**42'**) are operatively connected respectively with said at least one second oxy fuel cutting torch (**31'**) and with said at least one first oxy fuel cutting torch (**31**), so as to allow the single operator positioned in said at least one first operative station (**40**) or in said at least one second operative station (**40'**) to control said at least one second and one first oxy fuel cutting torch (**31'**, **31**) in response to the detection of images respectively on said second or first display means (**48**, **48'**) relating to malfunctions thereof.

8. Plant according to any one of the preceding claims, wherein said first predetermined distance (**d1**) and said second predetermined distance (**d1'**) are comprised between 10 m and 20 m, said third predetermined distance (**d3**) being greater than 40 m.

9. Method for the oxy-fuel cutting of products (**B**) made of structural steel by means of an oxy-fuel cutting plant controllable by a single operator positioned in an operative station (**40**) according to any one of the preceding claims, comprising the steps of:
- providing at least one first machining station (**10**) and at least one second machining station (**10'**) comprising respectively at least one first and at least one second oxy fuel cutting torch (**31**, **31'**) for performing a first and a second oxy-fuel cutting process;
- loading of the product (**B**) made of structural steel into said at least one first and one second machining station (**10**, **10'**) so that at least one first portion is at said at least one first machining station (**10**) and so that at least one second portion is at said at least one second machining station (**10'**);
- at least one first and at least one second oxy fuel cutting of the product (**B**) made of structural steel simultaneously at said at least one first and second portions, said at least one first and one second oxy fuel cutting torch (**31**, **31'**) during the processing being mutually spaced apart by a third predetermined distance (**d3**) so that the single operator is hindered from simultaneously visually monitoring both said at least one first and at least one second oxy fuel cutting torch (**31**, **31'**);
- monitoring - by the single operator - said at least one first and at least one second oxy fuel cutting torch (**31**, **31'**) during said step of said at least one first and at least one second oxy fuel cutting of the product (**B**) made of structural steel, one of said at least one first and at least one second oxy fuel cutting torch (**31**, **31'**) being visually monitored, the other of said at least one first and at least one second oxy fuel cutting torch (**31**, **31'**) being monitored by means of a video surveillance system (**46**);
- selective stopping of said at least one first and/or at least one second oxy fuel cutting torch (**31**, **31'**) in response to the detection of malfunctions thereof, said malfunctions being detected by the same single operator by visually checking them and/or by means of the video surveillance (**46**) system.

10. Method according to the preceding claim, further comprising a step of controlling said at least one first and/or at least one second oxy fuel cutting torch (**31**, **31'**) by means of first control means (**42**) and/or second control means (**42'**) in response to the detection of malfunctions of said at least one first and/or at least one second oxy fuel cutting torch (**31**, **31'**).
